# EUROPEAN PATENT APPLICATION

(11) **EP 1 574 891 A2**
(43) Date of publication of application: **14.09.2005**
(21) Application number: 05001969.4
(22) Date of filing: 31.01.2005
(51) Int. Cl.: G02B 21/34, B01L 3/00

(54) **Thermoplastic array hybridization apparatus and method of making same**

(30) Priority: 09.03.2004 US 797764
(71) Applicant: Agilent Technologies Inc, Palo Alto, CA 94306-2024 (US)
(72) Inventor: Thompson, Allen C., Sunnyvale, CA 94087 (US); Chow, Andre B., Belmont, CA 94002 (US)
(74) Representative: Schoppe, Fritz

(57) **Abstract**

An apparatus and method for making an array hybridization chamber that holds a thermoplastic substrate in a flat position. The apparatus employs a thermoplastic substrate having one or more support ridges. Methods of making the hybridization apparatus and chamber are also disclosed.

## Description

### FIELD OF THE INVENTION

The invention relates to the field of micro arrays, and more particularly to novel backings for use with microarrays. In particular, the invention relates to a thermoplastic substrate for use with a microarray hybridization chamber. Methods of making the apparatus are also described.

### BACKGROUND OF THE INVENTION

Polynucleotide arrays (such as DNA or RNA arrays) are known and are used, for example, as diagnostic or screening tools. Such arrays include regions of usually different sequence polynucleotides arranged in a predetermined configuration on a substrate. These regions (sometimes referenced as "features") are positioned at respective locations ("addresses") on the substrate. In use, the arrays, when exposed to a sample, will exhibit an observed binding or hybridization pattern. This binding pattern can be detected upon interrogating the array. For example, all polynucleotide targets (for example, DNA) in the sample can be labeled with a suitable label (such as a fluorescent dye), and the fluorescence pattern on the array accurately observed following exposure to the sample. Assuming that the different sequence polynucleotides were correctly deposited in accordance with the predetermined configuration, then the observed binding pattern will be indicative of the presence and/or concentration of one or more polynucleotide components of the sample.

Biopolymer arrays can be fabricated by depositing previously obtained biopolymers (such as from synthesis or natural sources) onto a substrate, or by *in situ* synthesis methods. Methods of depositing obtained biopolymers include dispensing droplets to a substrate from dispensers such as pin or capillaries (such as described in US 5,807,522) or such as pulse jets (such as a piezoelectric inkjet head, as described in PCT publications WO 95/25116 and WO 98/41531, and elsewhere). For *in situ* fabrication methods, multiple different reagent droplets are deposited from drop dispensers at a given target location in order to form the final feature (hence a probe of the feature is synthesized on the array stubstrate). The *in situ* fabrication methods include those described in US 5,449,754 for synthesizing peptide arrays, and described in WO 98/41531 and the references cited therein for polynucleotides. The *in situ* method for fabricating a polynucleotide array typically follows, at each of the multiple different addresses at which features are to be formed, the same conventional iterative sequence used in forming polynucleotides from nucleoside reagents on a support by means of known chemistry. This iterative sequence is as follows: (a) coupling a selected nucleoside through a phosphite linkage to a functionalized support in the first iteration, or a nucleoside bound to the substrate (i.e. the nucleoside-modified substrate) in subsequent iterations; (b) optionally, but preferably, blocking unreacted hydroxyl groups on the substrate bound nucleoside; (c) oxidizing the phosphite linkage of step (a) to form a phosphate linkage; and (d) removing the protecting group ("deprotection") from the now substrate bound nucleoside coupled in step (a), to generate a reactive site for the next cycle of these steps. The functionalized support (in the first cycle) or deprotected coupled nucleoside (in subsequent cycles) provides a substrate bound moiety with a linking group for forming the phosphite linkage with a next nucleoside to be coupled in step (a). Final deprotection of nucleoside bases can be accomplished using alkaline conditions such as ammonium hydroxide, in a known manner.

The foregoing chemistry of the synthesis of polynucleotides is described in detail, for example, in Caruthers, Science 230: 281-285, 1985; Itakura et al., Ann. Rev. Biochem. 53: 323-356; Hunkapillar et al., Nature 310:"105-110, 1984; and in "Synthesis of Oligonucleotide Derivatives in Design and Targeted Reaction of Oligonucleotide Derivatives", CRC Press, Boca Raton, Fla., pages 100 et seq., US 4,458,066, US 4,500,707, US 5,153,319, US 5,869,643, EP 0294196, and elsewhere

Backings used for microarrays are important because they enclose the polynucleotides used for the hybridizations. A variety of backings have been proposed for both deposition and *in situ* microamays. A variety of materials have been used and proposed. For instance, the standard backing may comprise a glass substrate or similar type material. A typical gasket and/or spacer is then disposed onto the glass, adhered to the glass, or may be pre-cut and attached to the glass. The gaskets are designed to provide spacing so that the polynucleotides reside in a region defined as a hybridization chamber. However, a number of problems exist using glass backing for microarrays. The glass can be broken and the area for depositing features and/or polynucleotides can be limited by the material and gaskets. Also, this type of design often requires the use of catalysts or curing agents that may contaminate samples or interfere with hybridization experiments. In addition, it would be desirable to design backings that may be used or better adapted for wash/dry cycles as well as easily controllable so that chamber sizes and weight of the backings can be reduced. Improved microarray hybridization backings have begun using polymers instead of glass to solve some of these problems. However, to date many of these backings have been ineffective since they lack the suitable characteristics described above in combination with sufficient rigidity after the insertion of the backing into an array holder.

It, therefore, would be desirable to provide an array hybridization apparatus that meets the above described needs and is easy to assemble or make.

### SUMMARY OF THE INVENTION

The invention provides an array hybridization apparatus and method of making the same. The array hybridization apparatus comprises a slide for holding an array, a thermoplastic substrate opposite said slide for acting as a backing for said array hybridization apparatus, a gasket interposed between said slide and said substrate, and a spacer interposed between said slide and said substrate and adjacent to said gasket wherein an array hybridization chamber is defined between said slide, said substrate, said gasket and said spacer when said slide and said substrate contact said gasket and said spacer. The back side of the thermoplastic substrate may comprise one or more ridges to provide support to the thermoplastic substrate after it has been inserted into the holder. The ridges may be molded and run the length and/or width of the thermoplastic backing. An array hybridization chamber is defined between the thermoplastic backing, the gasket and the spacer when the array cover contacts the thermoplastic backing. The array hybridization chamber is a result of the gasket being more deformable than the spacer positioned adjacent to it The spacer will only allow the slide and substrate to compress the gasket to the spacer's height.

The invention also provides a method for making an array hybridization apparatus. The method comprises providing a slide, a thermoplastic substrate, gasket and spacer; and contacting said slide, thermoplastic substrate, gasket and spacer to define an array hybridization chamber wherein said thermoplastic substrate is maintained in a substantially flat position.

### BRIEF DESCRIPTION OF THE DRAWINGS

Embodiments of the invention will now be described with reference to the drawings, in which:
FIG. 1 illustrates a slide carrying an array, of the present invention;
FIG. 2 is an enlarged view of a portion of FIG.1 showing ideal spots or features;
FIG. 3 is an enlarged illustration of a portion of the substrate in FIG. 2;
FIG. 4A is a perspective view of an embodiment of the invention;
FIG. 4B is a second perspective view of an embodiment of the invention;
FIG. 5A shows a cross sectional view of the present invention when it is in assembled form.
FIG. 5B shows an enlarged portion of FIG. 5A showing the support ridges on the thermoplastic substrate.
FIG. 6 shows and embodiment of the present invention in assembled form.
FIG. 7a shows a cross section of an embodiment of the invention in non-assembled form.
FIG. 7B shows another cross section of an embodiment of the invention in assembled form.

### DETAILED DESCRIPTION OF THE INVENTION

Before describing the invention in detail, it must be noted that, as used in this specification and the appended claims, the singular forms "a," "an," and "the" include plural referents unless the context clearly dictates otherwise. Thus, for example, reference to "a backing" includes more than one "backing". Reference to a "spacer" or "substrate" includes more than one "spacer" or "substrate". In describing and claiming the present invention, the following terminology will be used in accordance with the definitions set out below.

A "biopolymer" is a polymer of one or more types of repeating units. Biopolymers are typically found in biological systems (although they may be made synthetically) and particularly include peptides or polynucleotides, as well as such compounds composed of or containing amino acid analogs or non-amino acid groups, or nucleotide analogs or non-nucleotide groups. This includes polynucleotides in which the conventional backbone has been replaced with a non-naturally occurring or synthetic backbone, and nucleic acids (or synthetic or naturally occurring analogs) in which one or more of the conventional bases has been replaced with a group (natural or synthetic) capable of participating in Watson-Crick type hydrogen bonding interactions. Polynucleotides include single or multiple stranded configurations, where one or more of the strands may or may not be completely aligned with another. A "nucleotide" refers to a sub-unit of a nucleic acid and has a phosphate group, a 5 carbon sugar and a nitrogen containing base, as well as functional analogs (whether synthetic or naturally occurring) of such sub-units which in the polymer form (as a polynucleotide) can hybridize with naturally occurring polynucleotides in a sequence specific manner analogous to that of two naturally occurring polynucleotides. For example, a "biopolymer" includes DNA (including cDNA), RNA, oligonucleotides, and PNA and other polynucleotides as described in US 5,948,902 and references cited therein (all of which are incorporated herein by reference), regardless of the source. An "oligonucleotide" generally refers to a nucleotide multimer of about 10 to 100 nucleotides in length, while a "polynucleotide" includes a nucleotide multimer having any number of nucleotides. A "biomonomer" references a single unit, which can be linked with the same or other biomonomers to form a biopolymer (for example, a single amino acid or nucleotide with two linking groups one or both of which may have removable protecting groups). A "peptide" is used to refer to an amino acid multimer of any length (for example, more than 10, 10 to 100, or more amino acid units). A biomonomer fluid or biopolymer fluid reference a liquid containing either a biomonomer or biopolymer, respectively (typically in solution).

The term "deformable gasket" refers to gasket materials that may be thermoset or thermoplastic. Thermoset materials may comprise materials such as rubbers that may be cured or set. Thermoplastic deformable gaskets may comprise materials such as elastomers or other materials known in the art.

The term "moldable" refers to materials that may be shaped or designed in desired configurations. For instance, these materials may comprise metals, plastics or other materials known in the art.

The term "plastic" refers to materials that may be thermoset or themoplastic.

A "set" or "sub-set" of any item (for example, a set of features) may contain one or more than one of the items (for example, a set of clamp members may contain one or more such members). An "array", unless a contrary intention appears, includes any one, two or three dimensional arrangement of addressable regions bearing a particular chemical moiety or moieties (for example, biopolymers such as polynucleotide sequences) associated with that region. An array is "addressable" in that it has multiple regions of different moieties (for example, different polynucleotide sequences) such that a region (a "feature" or "spot" of the array) at a particular predetermined location (an "address") on the array will detect a particular target or class of targets (although a feature may incidentally detect non-targets of that feature). Array features are typically, but need not be, separated by intervening spaces. In the case of an array, the "target" will be referenced as a moiety in a mobile phase (typically fluid), to be detected by probes ("target probes") which are bound to the substrate at the various regions. However, either of the "target" or "target probes" may be the one that is to be evaluated by the other (thus, either one could be an unknown mixture of polynucleotides to be evaluated by binding with the other). An "array layout" refers collectively to one or more characteristics of the features, such as feature positioning, one or more feature dimensions, and some indication of a moiety at a given location. "Hybridizing" and "binding", with respect to polynucleotides, are used interchangeably. When one item is indicated as being "remote" from another, this is referenced that the two items are at least in different buildings, and may be at least one mile, ten miles, or at least one hundred miles apart.

The term "adjacent" or "adjacent to" refers to a component or element that is near, next to or adjoining. For instance, a gasket may be adjacent to a spacer.

The term "substantially deformable", "compressible" or "deformable" shall all have a similar meaning.

The term "slide" refers to any number of materials having at least one planar surface capable of contacting a gasket or spacer. The term shall be broad based to include substrates, polymeric materials, silica based materials, plastics etc.. It's important that the "slide" maintain a certain amount of rigidity to compress or deform the gasket and contact the spacer. In certain instances a "slide" will be transparent to allow light to pass through its medium. However, this is not required. Also, the "slide" must be capable in certain instances to allow for the mounting or construction of an array on its surface. Although in certain cases this will not be required if the array is constructed on a separate surface.

The term "substrate" refers to any number of polymeric materials that may be molded. For instance, a substrate may comprise thermoplastic material capable of being molded to a desired shape or design. Thermoplastic materials do not require the use of catalysts, inhibitors or other chemical agents to cure the material. Thermoplastic materials are polymeric materials that lose their shape when heated, but will assume and retain various shapes and may be molded upon cooling to room temperature.

The term "thermoplastic" refers to materials that are meltable and when cooled take on a desired shape or form.

The term "thermosetting" refers to materials that may be cured or set.

It will also be appreciated that throughout the present application, that words such as "front", "rear", "back", "leading", "trailing", "top", "upper", and "lower", are all used in a relative sense only. "Fluid" is used herein to reference a liquid. Reference to a singular item, includes the possibility that there are plural of the same items present. Furthermore, when one thing is "slid" or "moved" or the like, with respect to another, this implies relative motion only such that either thing or both might actually be moved in relation to the other.

All patents and other cited references are incorporated into this application by reference.

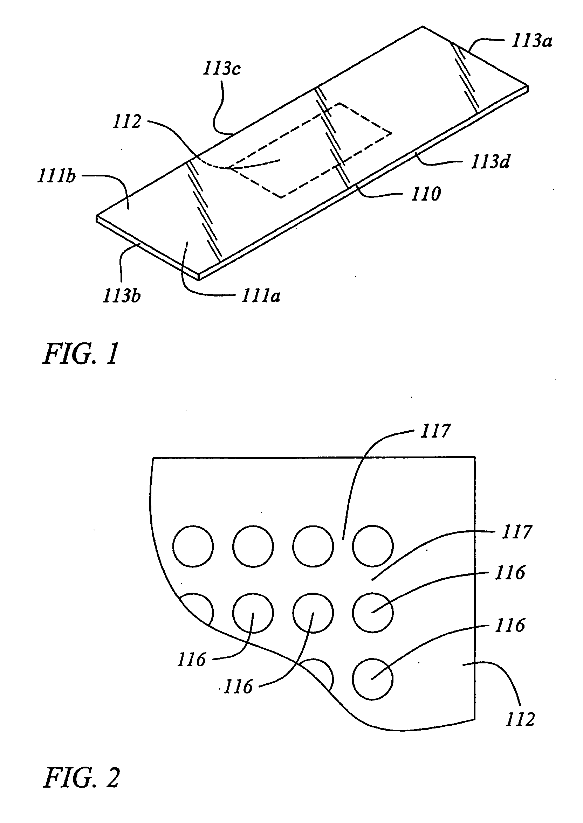

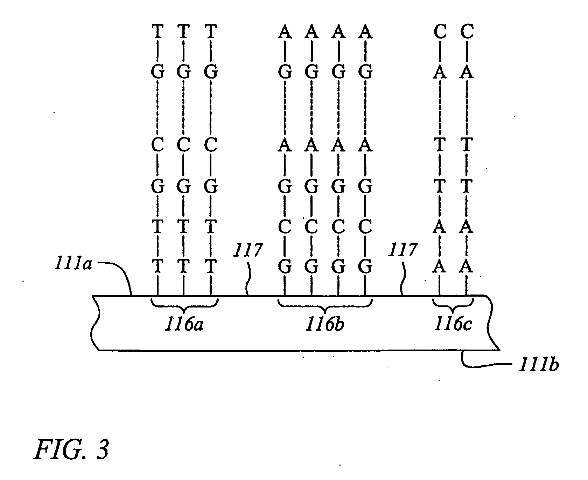

Referring first to FIGS. 1-3, typically the methods and apparatus of the present invention generate or use a contiguous planar transparent slide 110 carrying an array 112 disposed on a rear surface 111a of a substrate 110. It will be appreciated though, that more than one array (any of which are the same or different) may be present on the rear surface 111a, with or without spacing between such arrays. Note that one or more of the arrays 112 together will cover the entire region of the rear surface 111a, with regions of the rear surface 111a adjacent to the opposed sides 113c, 113d and the leading end 113a and the trailing end 113b of the slide 110. A front surface 111b of the slide 110 does not carry any of the arrays 112. Each of the arrays 112 can be designed for testing against any type of sample, whether a trial sample, reference sample, a combination of them, or a known mixture of polynucleotides (in which latter case the arrays may be composed of features carrying unknown sequences to be evaluated). The slide 110 may be of any shape, and any holder used with it adapted accordingly, although the slide 110 will typically be rectangular in practice. The array 112 contains multiple spots or features 116 of biopolymers in the form of polynucleotides. A typical array may contain from more than ten, more than one hundred, more than one thousand or ten thousand features, or even more than from one hundred thousand features. All of the features 116 may be different, or some or all could be the same. In the case where the array 112 is formed by the conventional *in situ* or deposition of previously obtained moieties, as described above, by depositing for each feature at least one droplet of reagent such as by using a pulse jet such as an inkjet type head, interfeature areas 117 will typically be present which do not carry any polynucleotide. It will be appreciated though, that the interfeature areas 117 could be of various sizes and configurations. Each feature carries a predetermined polynucleotide (which includes the possibility of mixtures of polynucleotides). As per usual, A, C, G, T represent the usual nucleotides. It will be understood that there may be a linker molecule (not shown) of any known types between the rear surface 111a and the first nucleotide.

The slide 110 may also carry on the front surface 111b, an identification code in the form of a bar code 115 printed on an opaque substrate in the form of a paper label attached by adhesive to the front side 111a (not shown in FIGS.). By "opaque" in this context is referenced that the means used to read the bar code 115 (typically a laser beam) cannot read the bar code 115 through the label without reading errors. Typically this means that less than 60% or even less than 50%, 30%, 20% or 10% of the signal from the code passes through the substrate. The bar code 115 contains an identification of the array 112 and either contains or is associated with, array layout or layout error information in a manner such as described in U.S. patent applications.

For the purpose of the discussions below, it will be assumed (unless the contrary is indicated) that the array 112 is a polynucleotide array formed by the deposition of previously obtained polynucleotides using pulse jet deposition units. However, it will be appreciated that an array of other polymers or chemical moieties generally, whether formed by multiple cycles *in situ* methods adding one or more monomers per cycle, or deposition of previously obtained moieties, or by other methods, may be present instead.

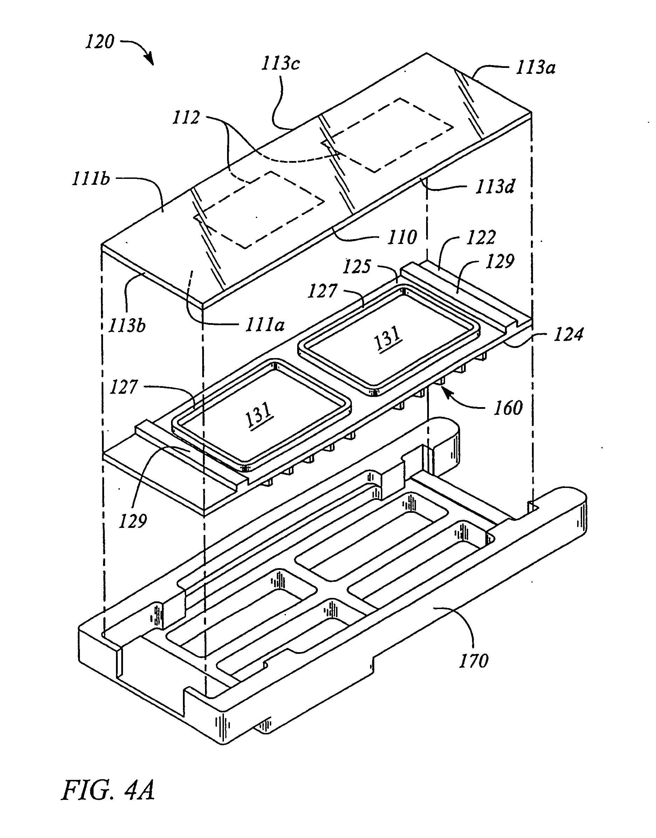

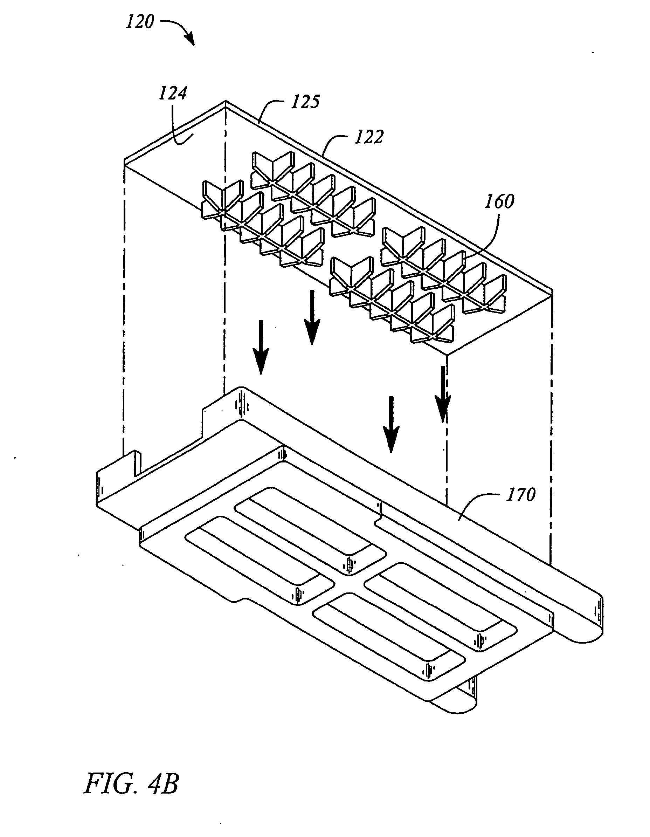

Referring now to FIGS. 4-5, the typical methods and apparatus of the present invention will now be described in more detail. An array hybridization apparatus 120 may comprise the slide 110 for holding the array 112, a thermoplastic substrate 125 opposite the slide 110 for acting as a backing for the array hybridization apparatus 120, a gasket 127 interposed between the slide 110 and the substrate 125, and a spacer 129. The spacer 129 is interposed between the slide 110 and the thermoplastic substrate 125 and positioned adjacent to the gasket 127 wherein the array hybridization chamber 131 of uniform volume is defined between the slide 110, the substrate 125, the gasket 127 and the spacer 129 when the slide 110 and the thermoplastic substrate 125 contact the gasket 127 and the spacer 129.

The hybridization apparatus 120 is designed for holding or positioning the array 112 so that maximum hybridizations/annealing of nucleic acids can take place between the array 112 and a target 113 of interest (target not shown in drawings).

The slide 110 may typically contain or be attached to the array 112 and may comprise any number of transparent materials such as glass, plastic, silicon or other materials known in the art to contain or be capable of containing arrays. Slide 110 can be thought of as the array substrate, but need not contain the array 112. The array 112 could also be attached or part of the substrate 125. The slide 110 may be designed in a variety of shapes, sizes and widths.

The thermoplastic substrate 125 may typically comprise a thermoplastic material capable of being cured without the use of chemicals, catalysts or inhibitors. The thermoplastic substrate 125 may be thought of as being the backing for the hybridization apparatus 120. However, in certain embodiments the thermoplastic substrate 125 may actually contain or comprise an array similar to array 112. The thermoplastic substrate 125 may be designed in a variety of shapes, sizes and widths. The thermoplastic material allows for molding the material to a variety of shapes and designs. In addition, the gasket 127 can be molded in place or may comprise a portion of the substrate 125. The thermoplastic material allows for a more efficient design of the gaskets 127 as well as a more efficient construction process for the array hybridization apparatus. For instance, the gasket 127 may comprise a portion of the thermoplastic substrate 125 and may be constructed using injection molding at the time of construction of the substrate 125. An injection molded thermoplastic substrate 125 and gasket 127 provides for more efficient use of space across the thermoplastic substrate 125 to allow more features per unit area on the substrate. In addition, the injection molding allows for more accurate construction as well as less steps in the construction of the array hybridization apparatus 120. The thermoplastic substrate 125 may comprise a front side 122 and back side 124. The back side 124 of the thermoplastic substrate 125 may comprise one or more ridges 160 to provide support to the thermoplastic substrate 125 after it has been inserted into a holder 170. The ridges 160 may be molded and run the length and/or width of the thermoplastic substrate 125. The invention is not limited to a single ridge. It is within the scope of the invention that multiple ridges may be employed in a variety of positions, shapes, sizes and lengths across either the front side 122 or the backside 124 of the thermoplastic substrate 125. The ridges 160 are important to the invention because they may be molded into the thermoplastic substrate 125, but also provide support so that when the thermoplastic substrate 125 is inserted into the holder 170 there is reduced bowing or bending of the thermoplastic substrate 125. It is important to prevent bending or bowing so that solutions in the chamber 131 and on the front side 122 of the thermoplastic substrate 125 do not spill out. In other embodiments the thermoplastic substrate 125 may also be constructed in a bowed format so that when it is inserted into the holder 170 it causes the thermoplastic substrate 125 to maintain a flat or substantially flat position.

The gasket 127 may be attached to the slide 110, the thermoplastic substrate 125, or both and is designed for holding or retaining the hybridization solutions for the array 112. Typically, the gasket 127 will be rectangular in shape and will be attached to the thermoplastic substrate 125. The shape and design of the gasket 127 is not important to the invention. However, it is important to the invention that the gasket 127 maintains a sufficient compressibility so as to form a seal between the slide 110, the gasket 127 and the thermoplastic substrate 125 when they contact each other. The gasket 127 must also retain the hybridization solution when the slide 110, thermoplastic substrate 125, the gasket 127 and the spacer 129 are all contacted. The gasket 127 may comprise any number of materials that are substantially deformable. For instance, the gasket 125 may comprise materials such as rubber, silicon, silicone, acrylamides, polyacrylamides, , non-synthetic polymers and synthetic polymers etc..

The spacer 129 may be attached to the slide 110, the thermoplastic substrate 125 or both. Typically, the spacer 129 will be attached to the slide 110 when the gasket 127 is attached to the thermoplastic substrate 125. The spacer 129 may comprise any number of shapes and sizes. It may also be positioned in any number of positions on the substrate or slide and may comprise substantially non deformable or non-compressable materials such as metal, wood, plastic etc.. FIG. 4A shows the spacer 129 spaced along the smaller length edges of the slide 110. The spacer 129 may also be placed along the longer edges of slide 110. For instance, the spacer 129 needs to be less deformable or compressible relative to the gasket 127. This allows the gasket 127 to act as a seal but deform only to the extent of the height of the spacer 129. Since the spacer 129 does not further collapse or compress the height or volume of the array hybridization chamber 131 can be gauged. The spacer 129 can range in height of from 25 to 500 microns. This forms the hybridization chamber 131 having a fixed volume based on the height of the spacer 129. The spacer 129 will similarly retain a height in the range of from 25 to 500 microns.

Having described the apparatus of the invention, a description of the method of assembling or making the array hybridization apparatus is now in order.

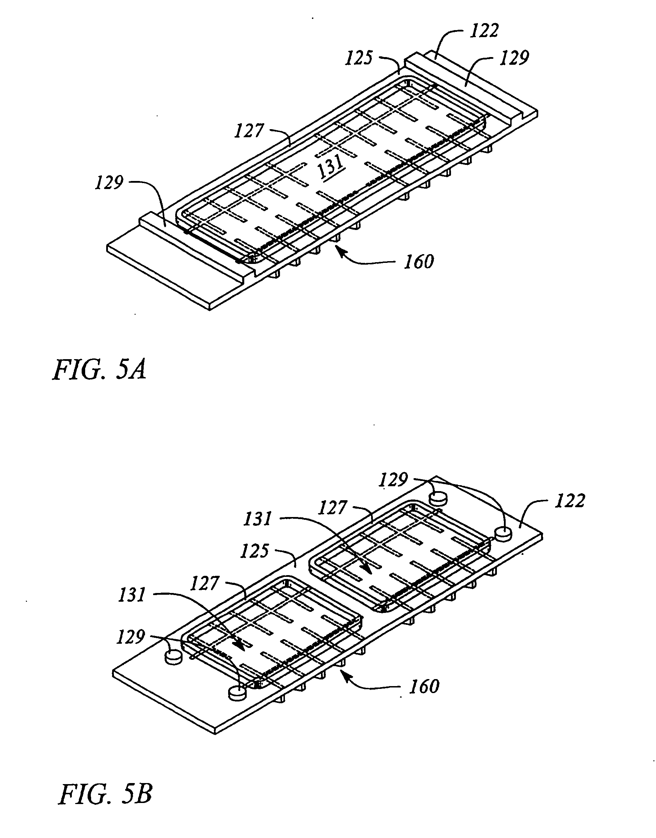

The array hybridization apparatus 120 can be easily assembled relative to other devices that contain fixed components. In its simplest form the array hybridization apparatus 120 may be constructed by providing the slide 110, the thermoplastic substrate 125, the gasket 127 and the spacer 129 and then contacting each of these components to define the array hybridization chamber 131 (See FIG. 4A and FIG. 5). As shown in FIGS. 4-6, the ridges 160 of the thermoplastic substrate 125 are designed to fit into holder 170 so that there is no bowing or bending of the thermoplastic substrate 125 after it has been inserted into the holder 170. It should be noted that the holder 170 holds the thermoplastic substrate 125 flat or substantially flat. In addition, the thermoplastic substrate 125 may be held or designed in a bowed or slightly bowed concave shape. This allows the thermplastic substrate 125 to sit flat or substantially flat after it has been inserted into the holder 170. It is important to the invention that the thermoplastic substrate 125 maintain a flat or substantially flat position. This prevents solutions that may be present in array hybridization chamber 131 from spilling. Typically, the gasket 127 and the spacer 129 are interposed between the slide 110 and the substrate 125. This may be accomplished by first molding the gasket 127 as a portion of either or both of the substrates. Next the arrays or oligonucleotides are attached to the slide 110 and positioned within the gasket 127. The array solutions are then added. The spacer 129 may then be added, attached or constructed on the slide 110. The slide 110 with the attached spacer 129 and the thermoplastic substrate 125 with the attached gasket 127 may then be contacted to form the array hybridization chamber 131. The components may be contacted by clamping or by joining the slide 110, an optional cover 140 and the thermoplastic substrate 125 in any of a number of manners that are well known in the art. The components are contacted under enough pressure to form a sealed hybridization chamber 131 between the slide 110, the gasket 127 and the substrate 125. However, too much pressure can also destroy the array 112 and the array hybridization chamber 131 and this should be avoided. The spacer 129 helps prevent this problem.

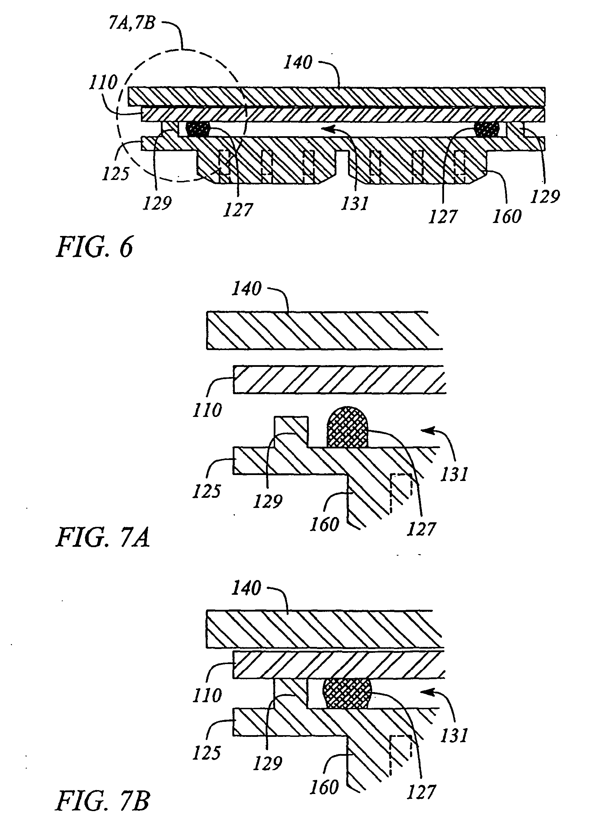

FIGS. 6 and 7 shows the present invention in its assembled form. The optional cover 140 is used to apply pressure to the front surface 111b of the slide 110. The thermoplastic substrate 125 will often be positioned on a rigid surface or placed in a container (not shown). As a result, the gasket 127 will be compressed to form a tight seal. As shown in the figures, the spacer 129 will not compress and the gasket 127 will only compress to the height of the spacer 129. In order for this to happen, the gasket 127 needs to be substantially more compressible or deformable than the spacer 129 and must also be slightly taller than the spacer 129 when mounted on the thermoplastic substrate 125 or slide 110. The array hybridization chamber 131 that is formed in between, maintains a uniform volume or height and the array is not damaged.

Clearly, minor changes may be made in the form and construction of the invention without departing from the scope of the invention defined by the appended claims. It is not, however, desired to confine the invention to the exact form herein shown and described, but it is desired to include all such as properly come within the scope claimed.

## Claims

1. An array hybridization apparatus for holding a slide, comprising:
(a) a thermoplastic substrate opposite said slide for acting as a backing for said array hybridization apparatus;
(b) a gasket interposed between said slide and said substrate; and
(c) a spacer interposed between said slide and said substrate and adjacent to said gasket wherein an array hybridization chamber is defined between said slide, said thermoplastic substrate, said gasket and said spacer when said slide and said substrate contact said gasket and said spacer and wherein said thermoplastic substrate is held flat.

2. An array hybridization apparatus as recited in claim 1, wherein said gasket comprises a substantially deformable material.

3. An array hybridization apparatus as recited in claim 1, wherein said spacer comprises a substantially non-deformable material.

4. An array hybridization apparatus as recited in claim 1, wherein said gasket is attached to said slide.

5. An array hybridization apparatus as recited in claim 1, wherein said gasket is attached to said thermoplastic substrate.

6. An array hybridization apparatus as recited in claim 1, wherein said gasket comprises a portion of said thermoplastic substrate.

7. An array hybridization apparatus as recited in claim 1, wherein said gasket is attached to both said slide and said thermoplastic substrate.

8. An array hybridization apparatus as recited in claim 1, wherein said spacer is attached to said slide.

9. An array hybridization apparatus as recited in claim 1, wherein said spacer is attached to said substrate.

10. An array hybridization apparatus as recited in claim 1, wherein said thermoplastic substrate further comprises a back side having at least one support ridge extending along the length of the thermoplastic backing.

11. An array hybridization apparatus as recited in claim 1, wherein said thermoplastic backside of said thermoplastic substrate comprises a least one support ridge extending across the width of the thermoplastic backing.

12. An array hybridization apparatus as recited in claim 1, wherein said spacer is attached to both said slide and said thermoplastic substrate.

13. An array hybridization apparatus as recited in claim 1, wherein said spacer comprises a material selected from the group consisting of polyurethanes, plastics, acrylics, metals and non-deformable or less deformable polymers.

14. An array hybridization apparatus as recited in claim 1, wherein said spacer is between 25 to 500 microns in height.

15. An array hybridization apparatus as recited in claim 11, wherein said array hybridization chamber is between 25 to 1000 microns in height.

16. A method of making an array hybridization apparatus having an array hybridization chamber comprising:
a. providing a slide, a thermoplastic substrate, gasket and spacer; and
b. contacting said slide, thermoplastic substrate, gasket and spacer to define a uniform array hybridization chamber wherein said thermoplastic substrate is held flat.

17. A method of making an array hybridization apparatus with an array hybridization chamber of uniform volume, comprising:
a. providing a slide opposite a thermoplastic substrate;
b. interposing a gasket and spacer between said slide and said thermoplastic substrate;
c. contacting said slide, said thermoplastic substrate, said gasket and said spacer to define a chamber there between wherein said thermoplastic substrate is held flat.
